# EUROPÄISCHE PATENTANMELDUNG

(11) **EP 0 822 123 A1**
(43) Veröffentlichungstag der Anmeldung: **04.02.1998**
(21) Anmeldenummer: 97110693.5
(22) Anmeldetag: 01.07.1997
(51) Int. Cl.: B60R 21/20

(54) **Lenkrad mit Airbag-Einheit für Fahrzeuge**

(30) Priorität: 30.07.1996 DE 19630725
(71) Anmelder: Bayerische Motoren Werke Aktiengesellschaft, 80788 München (DE)
(72) Erfinder: Faulstroh, Hans-Joachim, 86511 Schmiechen (DE); Zimmerhackl, Dietmar, 80686 München (DE)

(57) **Zusammenfassung**

Lenkrad mit Airbag-Einheit (5) für Fahrzeuge, mit einem Lenkkranz (1), Speichen (2) und einer Lenkradnabe (3). Die Airbag-Einheit (5) weist einen Luftsack (6) und einen Gasgenerator (7) auf, der an der Lenkradnabe (3) befestigt ist. Der dem Fahrer des Fahrzeugs zugewandte Luftsack (6) ist von einer Hupplatte (8) mit einem bei Airbag-Auslösung aufklappbaren Mittelteil (27) überdeckt. Der Gasgenerator (7) weist allseitig einen Abstand von der Hupplatte (8) auf, die an der Lenkradnabe (3) und/oder an den Speichen axial verstellbar abgestützt und von einem Federelement (Druckfeder 20) von der Lenkradnabe (3) weg belastet ist.

## Beschreibung

Die Erfindung betrifft ein Lenkrad mit Airbag-Einheit für Fahrzeuge, mit den im Oberbegriff des Patentanspruches 1 angegebenen Merkmalen.

Ein derartiges Lenkrad ist durch die EP 0 648 661 A1 bekannt, bei dem der Gasgenerator einerseits an der Lenkradnabe bzw. den Lenkradspeichen und andererseits an einem Stützarm der Hupplatte abgestützt ist. Durch die Befestigung des Gasgenerators an dem Stützarm der Hupplatte kann diese nicht insgesamt axial verstellt werden um beispielsweise eine Hupeinrichtung zu betätigen. Es ist deshalb ein Bereich der Hupplatte elastisch nachgiebig ausgebildet, der durch Handdruck ein Auslöseelement der Hupeinrichtung betätigt. Der nachgiebige Bereich der Hubplatte ist nicht ohne weiteres zu erkennen. In einer Gefahrensituation, in der die Hupeinrichtung betätigt werden soll, kann es vorkommen, daß nicht der nachgiebige Bereich sondern ein danebenliegender Bereich gedrückt wird, wodurch das Hupsignal nicht ertönt. Ein Auslösen der Hupeinrichtung ist auch dann erschwert, wenn die Hupplatte anstelle eines nachgiebigen Bereiches eine Öffnung aufweist, durch die das Schalt- oder Auslöseelement der Hupeinrichtung zu betätigen ist.

Der Erfindung liegt die Aufgabe zugrunde, ein Lenkrad mit Airbag-Einheit für Fahrzeuge mit den Merkmalen im Oberbegriff des Patentanspruches 1 anzugeben, das in einfacher Weise eine Betätigung der Hupeinrichtung ermöglicht.

Diese Aufgabe ist durch die im Patentanspruch 1 angegebenen Merkmale gelöst. Nachdem der Gasgenerator einen Abstand von der Hupplatte aufweist, läßt sich diese leicht axial verstellen. Die für eine Hupenbetätigung erforderliche Verstellkraft ist äußerst gering, wenn der Luftsack lediglich an dem Gasgenerator oder wie dieser an der Lenkradnabe und/oder an den Speichen des Lenkrades befestigt ist und das ein Abheben der Hupplatte von dem Kontakt- oder Auslöseelement der Hupeinrichtung bewirkende Federelement gering vorgespannt ist.

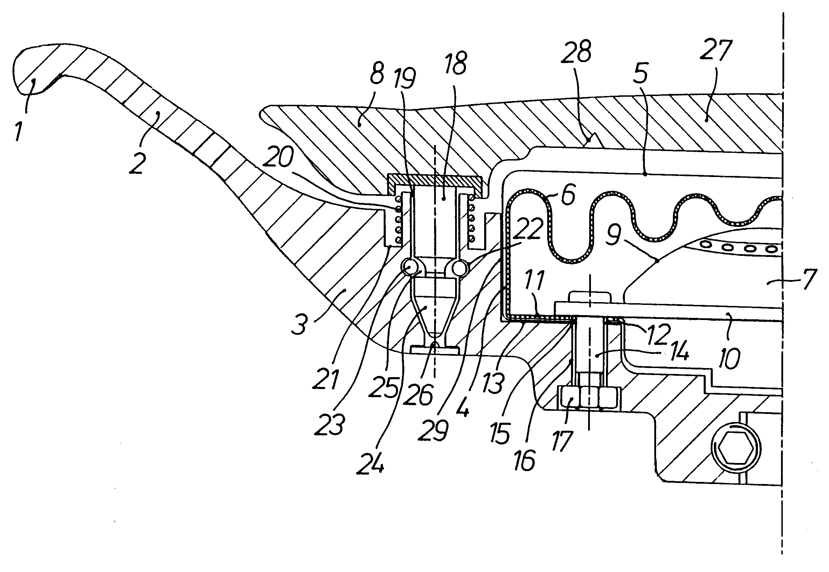

Vorteilhafte Ausgestaltungen der Erfindung sind Gegenstand von Unteransprüchen. Ein Ausführungsbeispiel der Erfindung wird anhand einer Zeichnung mit einer einzigen Fig. näher erläutert, die einen Querschnitt durch eine Hälfte des mit einer Airbag-Einheit versehenen Lenkrades darstellt.

Das in der einzigen Fig. dargestellte Lenkrad weist einen Lenkkranz 1 auf, der über mehrere, radial nach innen gerichtete Speichen 2 mit einer Lenkradnabe 3 verbunden ist. Auf der dem Fahrer des Fahrzeugs zugewandten Seite der Lenkradnabe 3 ist eine Vertiefung 4 ausgebildet, die eine Airbag-Einheit 5 aufnimmt, die einen dem Fahrer des Fahrzeugs zugewandten Luftsack 6 und auf der fahrerabgewandten Seite einen Gasgenerator 7 aufweist. Der Luftsack 6 ist von einem papierähnlichen Material umgeben und zusammen mit dem Gasgenerator 7 als vorgepacktes Teilemodul gefertigt, das nahezu vollständig in der Vertiefung 4 angeordnet ist. Der Luftsack 6 ist von einer dem Fahrer zugewandten Hupplatte 8 überdeckt, die eine größere radiale Erstreckung als der Luftsack 6 bzw. die Vertiefung 4 und der Gasgenerator 7 aufweist. Der Gasgenerator 7 ist in einem festen Gehäuse 9 mit einem radial zum Lenkrad vorstehenden Befestigungsflansch 10 untergebracht. Der Rand 11 der Gaseintrittsöffnung 12 des Luftsackes 6 ist mittels Befestigungselementen zwischen dem Befestigungsflansch und einer axialen Anlagefläche 13 der Lenkradnabe 3 festgeklemmt. Die Befestigungselemente sind durch Befestigungsbolzen 14 gebildet, die fluchtende Durchtrittsöffnungen 15, 16 in dem Rand 11 des Luftsackes 6 und in der Lenkradnabe 3 durchsetzen und auf der fahrerabgewandten Seite der Lenkradnabe 3 jeweils mit einer Gewindeschraube 17 zur Lagefixierung zu verbinden sind.

Von der fahrerabgewandten Seite der Hupplatte 8 stehen zu der Lenkradnabe gerichtet mehrere Stehbolzen 18 ab, die seitlich neben dem Luftsack 6 jeweils in eine axiale Aufnahmeöffnung 19 in der Lenkradnabe 3 oder in eine Speiche eingesteckt und begrenzt axial verstellbar von einer Halteeinrichtung festgehalten sind.

Jeder Stehbolzen 18 ist von einer Druckfeder 20 umgeben, die sich einerseits an der Hupplatte 8 und andererseits an einer Stützfläche 21 der die Aufnahmeöffnung 19 bildenden Lenkradnabe 3 oder Speiche abstützt.

Nach dem Festhalten des Stehbolzens 18 in der Aufnahmeöffnung 19 ist die Druckfeder 20 druckbelastet.

Die den Stehbolzen 18 in der Aufnahmeöffnung 19 festhaltende Halteeinrichtung weist einen in einer radialen Ringausnehmung 22 in der Aufnahmeöffnung 19 angeordneten Federring 23 auf. Beim axialen Einstecken des Stehbolzens 18 in die Aufnahmeöffnung 19 weitet sich der Federring 23 im Zusammenwirken mit einer konischen Stirnfläche 24 des Stehbolzens 18 elastisch radial auf. Zur Fixierung des Stehbolzens 18 in einem vorgegebenen axialen Bereich schnappt der Federring 23 elastisch in eine radiale Rastausnehmung 25 in dem Stehbolzen 18 ein, die entsprechend dem axialen Verstellweg der Hupplatte 8 bzw. des Stehbolzens 18 eine größere axiale Erstreckung als der Federring 23 aufweist. Bei einem Druck auf die Hupplatte 8 kann sich diese und der Stehbolzen 18 in einem axialen Verstellbereich verstellen und dabei der Stehbolzen 18 ein Kontakt- oder Auslöseelement 26 einer Hupeinrichtung betätigen, die dadurch ein Warnsignal abgibt. Nachdem beim axialen Verstellen der Hupplatte 8 der Gasgenerator 7 und der Luftsack 6 nicht verstellt werden und die Schraubenfeder 20 eine geringe Vorspannkraft aufweist, ist die zum Verstellen der Hupplatte 8 erforderliche Verstellkraft gering. Das bei einer Airbag-Auslösung aufklappbare Mittelteil 27 ist beispielsweise über Kerben 28 mit dem äußeren Bereich der Hupplatte 8 verbunden.

Bei der vorliegenden Ausführung ist der Luftsack 6 radial von der Umfangswand 29 der Vertiefung 4 zentriert. Die Durchtrittsöffnung 16 in der Lenkradnabe 3 ist im Durchmesser lediglich etwas größer als der Befestigungsbolzen 14 und legt dadurch im Zusammenwirken mit dem Befestigungsbolzen 14 die radiale Lage des Gasgenerators 7 fest.

## Patentansprüche

1. Lenkrad mit Airbag-Einheit für Fahrzeuge, mit einem Lenkkranz, Speichen und einer Lenkradnabe, wobei die Airbag-Einheit einen Luftsack und einen Gasgenerator aufweist, der an der Lenkradnabe befestigt ist, wobei der dem Fahrer des Fahrzeugs zugewandte Luftsack von einer Hupplatte mit einem bei Airbag-Auslösung aufklappbaren Mittelteil überdeckt ist,
dadurch gekennzeichnet, daß der Gasgenerator (7) allseitig einen Abstand von der Hupplatte (8) aufweist, die an der Lenkradnabe (3) und/oder an den Speichen axial verstellbar abgestützt und von einem Federelement von der Lenkradnabe (3) weg belastet ist.

2. Lenkrad nach Anspruch 1,
dadurch gekennzeichnet, daß die Lenkradnabe (3) auf der dem Fahrer zugewandten Seite eine axiale Vertiefung (4) aufweist, die den Gasgenerator (7) und den Luftsack (6) nahezu vollständig aufnimmt.

3. Lenkrad nach Anspruch 1 oder 2, mit einem Gasgenerator, der ein festes Gehäuse mit einem radial zum Lenkrad vorstehenden Befestigungsflansch aufweist,
dadurch gekennzeichnet, daß der von dem Fahrer des Fahrzeugs abgewandte Rand (11) der Gaseintrittsöffnung (12) des Luftsackes (6) mittels Befestigungselementen (Befestigungsbolzen 14) zwischen dem Befestigungsflansch (10) und einer axialen Anlagefläche (13) der Lenkradnabe (3) festgeklemmt ist.

4. Lenkrad nach Anspruch 3,
dadurch gekennzeichnet, daß die Befestigungselemente durch von dem Befestigungsflansch (10) axial abstehende Befestigungsbolzen (14) gebildet sind, die fluchtende Durchtrittsöffnungen (15 und 16) in dem Rand (11) des Luftsackes (6) und in der Lenkradnabe (3) durchsetzen und auf der fahrerabgewandten Seite der Lenkradnabe (3) mit einem Halteelement (Gewindeschraube 17) verbunden sind.

5. Lenkrad nach einem der Ansprüche 1 bis 4,
dadurch gekennzeichnet, daß die Hupplatte (8) mit einer größeren radialen Erstreckung als der Luftsack (6) ausgebildet ist.

6. Lenkrad nach Anspruch 5,
dadurch gekennzeichnet, daß von der fahrerabgewandten Seite der Hupplatte (8) zu der Lenkradnahe (3) gerichtete Stehbolzen (18) abstehen, die seitlich neben dem Luftsack (6) jeweils in eine axiale Aufnahmeöffnung (19) in der Lenkradnabe (3) oder in eine Speiche eingesteckt und begrenzt axial verstellbar von einer Halteeinrichtung festgehalten sind.

7. Lenkrad nach Anspruch 6,
dadurch gekennzeichnet, daß der Stehbolzen (18) von einer Druckfeder (20) umgeben ist, die sich einerseits an der Hupplatte (8) und andererseits an einer Stützfläche (21) der die Aufnahmeöffnung (19) bildenden Lenkradnabe (3) oder Speiche abstützt.

8. Lenkrad nach Anspruch 7,
dadurch gekennzeichnet, daß nach dem Einbringen des Stehbolzens (18) in die Aufnahmeöffnung (19) die Druckfeder (20) druckbelastet ist.

9. Lenkrad nach Anspruch 8,
dadurch gekennzeichnet, daß die Halteeinrichtung einen in einer radialen Ringausnehmung (22) in der Aufnahmeöffnung (19) angeordneten Federring (23) aufweist, der beim axialen Einstecken des Stehbolzens (18) in die Aufnahmeöffnung (19) im Zusammenwirken mit einer konischen Stirnfläche (24) des Stehbolzens (18) elastisch radial aufweitbar ist und zur Fixierung des Stehbolzens (18) in einem vorgegebenen axialen Bereich in eine radiale Rastausnehmung (25) in dem Stehbolzen (18) eingreift, die entsprechend dem axialen Verstellweg der Hupplatte (8) bzw. des Stehbolzens (18) eine größere axiale Erstreckung als der Federring (23) aufweist.

10. Lenkrad nach einem der Ansprüche 6 bis 9,
dadurch gekennzeichnet, daß bei einem Druck auf die Hupplatte (8) der Stehbolzen (18) ein Kontakt- oder Auslöseelement (26) einer Hupeinrichtung betätigt.
